Europäisches Patentamt

European Patent Office

Office européen des brevets

(19)

(11) Veröffentlichungsnummer : **0 175 139**
**B1**

(12) **EUROPÄISCHE PATENTSCHRIFT**

(45) Veröffentlichungstag der Patentschrift :
25.05.88

(51) Int. Cl.⁴ : **H 05 G   1/32, H 05 G   1/20,**
**H 02 M   7/5395**

(21) Anmeldenummer : 85110107.1

(22) Anmeldetag : 12.08.85

(54) Schaltungsanordnung zur Hochspannungsversorgung einer Röntgenröhre.

(30) Priorität : 23.08.84 DE 3431082

(43) Veröffentlichungstag der Anmeldung :
26.03.86 Patentblatt 86/13

(45) Bekanntmachung des Hinweises auf die Patenterteilung : 25.05.88 Patentblatt 88/21

(84) Benannte Vertragsstaaten :
BE DE FR IT NL

(56) Entgegenhaltungen :
EP-A- 0 096 843
EP-A- 0 102 532
EP-A- 0 108 336
DE-A- 3 309 469
FR-A- 2 415 414
GB-A- 2 005 878
US-A- 4 167 670

(73) Patentinhaber : Heimann GmbH
Weher Köppel 6
D-6200 Wiesbaden 1 (DE)

(72) Erfinder : Herwig, Thomas
Wiesenstrasse 8
D-6228 Eltville 4 (DE)
Erfinder : Geus, Georg
Bert-Brecht-Strasse 16
D-6200 Wiesbaden (DE)

(74) Vertreter : Mehl, Ernst, Dipl.-Ing. et al
Postfach 22 01 76
D-8000 München 22 (DE)

## Beschreibung

Die vorliegende Erfindung betrifft eine Schaltungsanordnung zur Hochspannungsversorgung für eine Röntgenröhre gemäß dem Oberbegriff von Patentanspruch 1. Eine derartige Schaltungsanordnung ist aus der DE-OS 2 802 513 bekannt. Dort werden zur Primärseite des Hochspannungstransformators stufenweise Kondensatoren oder Induktivitäten zum Abgleich der Resonanzfrequenz mit der vorgegebenen Generatorfrequenz zugeschaltet. Dieser Abgleich bedeutet einen hohen Aufwand an Material und eine erhöhte Störanfälligkeit gegenüber einer Beeinflussung der Resonanzfrequenz durch die Umgebung. Der vorliegenden Erfindung liegt die Aufgabe zugrunde, einen Abgleich zwischen der Resonanzfrequenz des Hochspannungserzeugers und der Generatorfrequenz der Ansteuerschaltung einfacher und weniger störanfällig zu gestalten.

Diese Aufgabe wird bei einer Schaltungsanordnung gemäß dem Oberbegriff durch die kennzeichnenden Merkmale von Patentanspruch 1 gelöst. Indem die Amplitude der Hochspannung durch Variation des Tastverhältnisses, nicht aber der Impulsfolgefrequenz der Ansteuerimpulse eingestellt wird, gewinnt man die Impulsfolgefrequenz als in Grenzen freien Parameter.

Der Abgleich auf die Resonanzfrequenz erfolgt vorteilhaft durch Variation der Impulsfolgefrequenz, bis der Spitzenwert des Ansteuerstromes am Ausgang der Ansteuerschaltung ein Minimum erreicht. So wird auf einfache Weise die Resonanzfrequenz der gesuchten Parallelresonanz des Hochspannungserzeugers ermittelt. Dieses Abgleichverfahren ermöglicht außerdem, daß zwischen die Ansteuerschaltung und den Hochspannungserzeuger ein Spannungswandler geschaltet ist, dessen Ansteuerstrom mit dem ausgangsseitig entnommenen Strom steigt. Auf diese Weise kann ohne Schwierigkeit eine elektronische Nachregelung der Generatorfrequenz erfolgen. Dies ist vorteilhaft, wenn eine Änderung der Resonanzfrequenz während des Betriebes zu erwarten ist.

Die Erfindung wird nun anhand von 2 Figuren näher erläutert. Sie ist nicht auf das gezeigte Beispiel beschränkt.

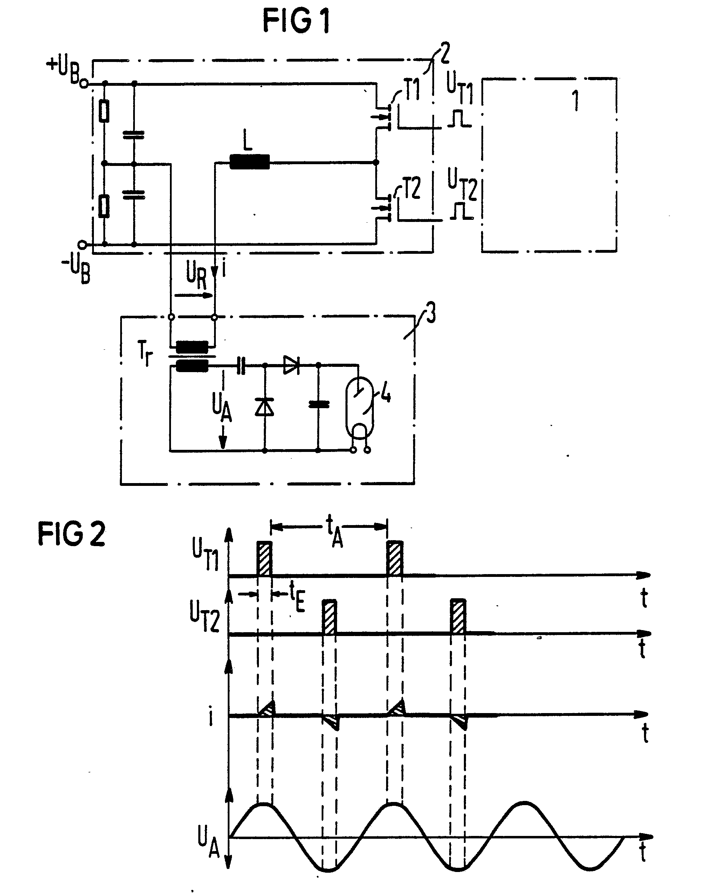

Figur 1 zeigt eine erfindungsgemäße Schaltungsanordnung, Figur 2 zeigt die wesentlichen Spannungen und Ströme im abgeglichenen Zustand.

Eine Ansteuerschaltung 1 beinhaltet einen Impulsgenerator zur Erzeugung von Spannungsimpulsen und Regeleinrichtungen zur Regelung des Tastverhältnisses und der Impulsfolgefrequenz. Durch die erzeugten Spannungsimpulse $U_{T1}$ bzw. $U_{T2}$ werden die Transistoren T1 bzw. T2 einer Spannungswandlerschaltung 2 angesteuert. Die Spannungswandlerschaltung 2 erzeugt bipolare Impulse mit der Stromstärke i, welche der Primärwicklung eines Hochspannungstransformators Tr in einem Hochspannungserzeuger 3 zugeführt werden. Die Stromstärke i wird gemessen, ihr Spitzenwert wird durch Veränderung der Impulsfolgefrequenz der Ansteuerschaltung auf ein Minimum eingeregelt. Anschließend wird die Spannung am Transformator bei Resonanz (Resonanzspannung $U_R$) und damit die Speisespannung der Röntgenröhre durch Veränderung des Tastverhältnisses der Impulse an der Ansteuerschaltung auf den gewünschten Wert gebracht. Zur Änderung des Tastverhältnisses wird die Impulsbreite eingestellt, ohne daß die Impulsfolgefrequenz verändert wird.

Die Resonanzspannung $U_R$ stellt eine gedämpfte Schwingung dar, sie hat bei üblicher Auslegung des Hochspannungserzeugers einen annähernd sinusförmigen Verlauf, wie aus Figur 2 in Verbindung mit der Ausgangsspannung $U_A$ des Hochspannungstransformators Tr ersichtlich. Der durch die Impulse $U_{T1}$ bzw. $U_{T2}$ hervorgerufene Strom i liefert die im Hochspannungserzeuger 3 und der Röntgenröhre 4 verbrauchte Leistung, enthält aber keine nennenswerten Blindstromanteile.

Die in Figur 1 gezeigte Schaltung verwendet Feldeffekttransistoren. Sie ist daher einfach aufgebaut, bedarf geringer Ansteuerleistung, und ist für einmalige Einstellung der Resonanzfrequenz besonders vorteilhaft. Soll die Resonanzfrequenz elektronisch nachgestellt werden, so können die Transistoren T1 und T2 durch bekannte Transistorschaltungen ersetzt werden, welche einen lastabhängigen Basisstrom besitzen. In diesem Fall kann der Basisstrom als Maß für den Impulsstrom am Ausgang der Ansteuerschaltung unmittelbar zur Ermittlung des minimalen Stromwertes der Impulse herangezogen werden.

Im Hochspannungserzeuger 3 ist dem Hochspannungstransformator Tr eine einstufige Spannungsvervielfacherkaskade nachgeschaltet. Dadurch ergibt sich eine Verdoppelung der Transformatorspannung $U_A$. Bei Bedarf können auch mehrstufige Spannungsvervielfacherkaskaden eingesetzt werden.

Der Hochspannungerzeuger 3 ist in üblicher Weise mit der Röntgenröhre 4 in ein gemeinsames Gehäuse eingebaut, gegen Einflüsse äußerer Wechselfelder und gegen den Austritt unerwünschter Strahlung gesichert. Insbesondere bei derartigen Ausführungsformen hat die Erfindung den Vorteil, daß keine durch einen Abgleich zwischen der Resonanzfrequenz des Hochspannungserzeugers und der Impulsefolgefrequenz der Ansteuerschaltung bedingte erhöhte Empfindlichkeit gegenüber äußerer Beeinflußung der Resonanzfrequenz in Kauf genommen werden muß, wie das beim Abgleich der Resonanzfrequenz durch außen angebrachte Abgleichelemente wie Kondensatoren und Induktivitäten der Fall wäre.

Ein besonderer Vorteil der erfindungsgemäßen Schaltungsanordnung besteht auch darin, daß der Abgleich zwischen Resonanzfrequenz und der Generatorfrequenz kontinuierlich und während des Betriebes erfolgen kann, ohne daß Umschaltspitzen des Stromes oder der Spannung oder undefinierte Schwingungszustände, insbesondere Einschwingungszustände, wie beim Abgleichen durch das bekannte Umschalten von Kondensatoren, entstehen.

**Patentansprüche**

1. Schaltungsanordnung zur Hochspannungsversorgung für eine Röntgenröhre (4), welche eine Ansteuerschaltung (1) mit einem Impulsgenerator, einen Hochspannungserzeuger (3) mit einem Hochspannungstransformator (Tr) und Einrichtungen zum Frequenzabgleich zwischen einer Resonanzfrequenz des Hochspannungserzeugers (3) und der Impulsfolgefrequenz des Impulsgenerators und Einrichtungen zur Regelung der Amplitude der Hochspannung am Hochspannungstransformator (Tr) enthält, dadurch gekennzeichnet, daß die Ansteuerschaltung (1) Regeleinrichtungen für die Impulsfolgefrequenz und das Tastverhältnis der Impulse enthält.

2. Schaltungsanordnung nach Anspruch 1, dadurch gekennzeichnet, daß die Ansteuerschaltung (1) Einrichtungen zur Messung des Impulsstromes und Steuereinrichtungen enthält, welche durch Änderung der Impulsfolgefrequenz den Spitzenwert des Impulsstromes auf einen Minimalwert einstellen.

3. Schaltungsanordnung nach Anspruch 2, dadurch gekennzeichnet, daß zwischen die Ansteuerschaltung (1) und den Hochspannungserzeuger (3) ein Spannungswandler geschaltet ist, dessen Ansteuerstrom mit dem ausgangsseitig entnommenen Strom steigt.

4. Abgleichverfahren zum Abgleich einer Schaltungsanordnung nach einem der Ansprüche 1-3, dadurch gekennzeichnet, daß zunächst der Spitzenwert des zur Primärwicklung des Hochspannungstransformators (Tr) fließenden Stromimpulses gemessen und durch Veränderung der Impulsfolgefrequenz auf einen Minimalwert eingestellt wird und daß dann die Ausgangsspannung des Hochspannungstransformators (Tr) durch eine Veränderung des Tastverhältnisses bei konstanter Impulsfolgefrequenz eingestellt wird.

5. Schaltungsanordnung nach Anspruch 1, dadurch gekennzeichnet, daß die Ansteuerschaltung eine auf den Impulsstrom ansprechende Regelschaltung enthält und daß die Regelschaltung die Impulsfolgefrequenz kontinuierlich auf den entsprechend der jeweiligen Belastung und Spannung günstigsten Wert einstellt.

**Claims**

1. Circuit arrangement, for a high-voltage supply for an X-ray tube (4), which arrangement includes a control circuit (1) with a pulse generator, a high-voltage generator (3) having a high-voltage transformer (Tr) and equipment for frequency adjustment between a resonance frequency of the high-voltage generator (3) and the pulse repetition frequency of the pulse generator and equipment for controlling the amplitude of the high-voltage transformer (Tr), characterised in that the control circuit (1) includes regulating equipment for the pulse repetition frequency and the pulse duty factor.

2. Circuit arrangement according to claim 1, characterised in that the control circuit (1) contains equipment for measuring the pulse current and control devices which set the peak value of the pulse current to a minimum value by altering the pulse repetition frequency.

3. Circuit arrangement according to claim 2, characterised in that between the control circuit (1) and the high-voltage generator (3) there is connected a voltage transformer, the drive current of which rises with the current drawn from the output side.

4. Adjusting method for adjusting a circuit arrangement according to claim 1-3, characterised in that firstly the peak value of the current pulse flowing to the primary coil of the high-voltage transformer (Tr) is measured and is set to a minimum value by altering the pulse repetition frequency and that then the output voltage of the high-voltage transformer (Tr) is set with constant pulse repetition frequency by altering the pulse duty factor.

5. Circuit arrangement according to claim 1, characterised in that the control circuit contains a regulating circuit responsive to the pulse current and that the regulating circuit sets the pulse repetition frequency continuously at the most favourable value corresponding to the respective load and voltage.

**Revendications**

1. Montage prévu pour l'alimentation à haute tension d'un tube (4) à rayons X et qui contient un circuit de commande (1) comportant un générateur d'impulsions, un générateur de haute tension (3) muni d'un transformateur à haute tension (Tr), et des dispositifs pour aligner entre elles une fréquence de résonance du générateur de haute tension (3) et la fréquence de récurrence des impulsions des générateurs d'impulsions, et des dispositifs pour régler l'amplitude de la haute tension aux bornes du transformateur à haute tension (Tr), caractérisé par le fait que le circuit de commande (1) contient des dispositifs de réglage pour la fréquence de récurrence des impulsions et pour le taux d'impulsions.

2. Montage suivant la revendication 1, caractérisé par le fait que le circuit de commande (1) contient des dispositifs pour mesurer le courant impulsionnel et des dispositifs de commande qui règlent la valeur maximale du courant impulsionnel à une valeur minimale par modification de la fréquence de récurrence des impulsions.

3. Montage suivant la revendication 2, caractérisé par le fait qu'entre le circuit de commande (1) et le générateur de haute tension (3) se trouve branché un transformateur de tension, dont le courant de commande augmente de concert avec le courant prélevé côté sortie.

4. Procédé d'alignement servant à régler un montage suivant l'une des revendications 1-3, caractérisé par le fait qu'on mesure tout d'abord la valeur maximale de l'impulsion de courant envoyée à l'enroulement primaire du transformateur à haute tension (Tr) et qu'on la règle à une valeur minimale par modification de la fréquence de récurrence des impulsions et qu'on règle ensuite la tension de sortie du transformateur à haute tension (Tr) au moyen d'une modification du taux d'impulsions, pour une fréquence constante de récurrence des impulsions.

5. Montage suivant la revendication 1, caractérisé par le fait que le circuit de commande contient un circuit de réglage répondant au courant impulsionnel et que le circuit de réglage règle continûment la fréquence de récurrence des impulsions sur la valeur appropriée en fonction de la charge et de la tension respectives.

0 175 139

# FIG 1

# FIG 2

1